# EUROPÄISCHE PATENTSCHRIFT

(11) **EP 1 961 633 B1**
(45) Veröffentlichungstag und Bekanntmachung des Hinweises auf die Patenterteilung: **09.06.2010**
(21) Anmeldenummer: 08101867.3
(22) Anmeldetag: 22.02.2008
(51) Int. Cl.: B60T 7/10, G05G 1/04

(54) **Handbremseinrichtung**
Handbrake device
Dispositif de frein à main

(30) Priorität: 23.02.2007 AT 2962007
(43) Veröffentlichungstag der Anmeldung: 27.08.2008
(73) Patentinhaber: DGS Druckguss Systeme AG, 9015 St. Gallen (CH)
(72) Erfinder: Pichlbauer, Peter, 9403 Goldach (CH); Huber, Thomas, 9100 Herisau (CH); Schober, Michael, 9303 Wittenbach (CH)
(74) Vertreter: Babeluk, Michael

(56) Entgegenhaltungen:
- DE-A1-102007 042 137
- US-A- 5 832 784

## Beschreibung

Die Erfindung betrifft eine Handbremseinrichtung gemäß dem Oberbegriff von Patentanspruch 1.

Ein Handbremshebel der genannten Art ist beispielsweise aus der DE 103 24 040 A1 bekannt.

Bekannte Handbremshebel weisen ein relativ hohes Gewicht auf, da mechanisch belastete Teile aus Stahlblech gefertigt werden. Kunststoff wird im Allgemeinen nur als Verkleidungselement für die Handbremseinrichtung und für wenig belastete Teile, wie beispielsweise den Druckknopf für die Entriegelungseinrichtung, verwendet. Kunststoff wird im Allgemeinen nur zur Verkleidung und Ummantelung eingesetzt. Der große Anteil an Stahlblechteilen wirkt sich nachteilig auf das Fahrzeuggewicht und die Herstellungskosten aus.

Zur Gewichtsverringerung ist es bekannt, den Handbremshebel aus Leichtmetall herzustellen. Für die Lagerung der Sperrklinke auf dem Hebel sind jedoch zusätzliche Vorkehrungen erforderlich, die die Verwendung von eigenen Bauteilen erfordern. Dadurch wird die Anzahl der Bauteile erhöht und die Fehleranfälligkeit gesteigert.

Aufgabe der Erfindung ist es, diese Nachteile zu vermeiden und das Gewicht des Handbremshebels, sowie dessen Herstellungsaufwand zu verringern. Insbesondere soll die Anzahl der benötigten Bauteile und damit der Montageaufwand minimiert werden.

Erfindungsgemäß werden diese Aufgaben gemäß Patentanspruch 1 dadurch gelöst, dass am Handbremshebel ein Lagerzapfen angeformt ist, der mindestens einen Haltevorsprung aufweist, und dass die Sperrklinke eine Öffnung aufweist, die einen kreisförmigen Lagerabschnitt aufweist, der an den Lagerzapfen angepasst ist und von dem mindestens ein Montagevorsprung ausgeht, der einen Umriss aufweist, der in einer Montagestellung der Sperrklinke den Umriss des Haltevorsprungs umschließt, wobei in den Betriebsstellungen der Sperrklinke der Haltevorsprung über den Umriss der Öffnung hinausgeht.

Wesentlich an der Erfindung ist, dass die Sperrklinke nicht nur am Handbremshebel gelagert ist, sondern dass diese Lagerung auch ohne die Verwendung zusätzlicher Bauteile auskommt. Die Öffnung der Sperrklinke hat dabei zwei Funktionen. Ein Teil der Kontur der Öffnung ist an den Lagerzapfen angepasst und dient dazu, gemeinsam mit dem Lagerzapfen ein Gleitlager zu bilden. Ein anderer Teil der Kontur der Öffnung bildet mindestens einen Montagevorsprung aus, der es ermöglicht, in einer bestimmten Stellung die Sperrklinke über den Haltevorsprung zu schieben, um den Teil montieren zu können. Wichtig ist dabei, dass in den Stellungen, die die Sperrklinke während des normalen Betriebs einnehmen kann, stets ein Teil des Haltevorsprungs die Sperrklinke übergreift, das heißt, dass der Haltevorsprung über den Umriss der Öffnung der Sperrklinke hinausgeht. Auf diese Weise ist sichergestellt, dass sich die Sperrklinke nicht vom Handbremshebel lösen kann.

Besonders günstig ist es, wenn der Lagerzapfen zwei einander gegenüberliegende Haltevorsprünge aufweist. Auf diese Weise ist sichergestellt, dass in den Betriebsstellungen der Sperrklinke ein sicherer Halt durch den Haltevorsprung gegeben ist, der nicht zu einem Verkanten der Sperrklinke führen kann. Bei dieser Ausführungsvariante wird man vorteilhafterweise die Betriebsstellungen so wählen, dass sie etwa um 90° gegenüber der Montagestellung versetzt sind.

Alternativ dazu ist es möglich, dass der Lagerzapfen von mehr als zwei gleichmäßig über den Umfang verteilte Haltevorsprünge aufweist. Diese Ausführung ermöglicht es, beispielsweise im Fall von drei Haltevorsprüngen die Montagestellung um etwa 60° gegenüber den Betriebsstellungen zu versetzen. Dadurch ist es möglich, auch komplexeren Einbaubedingen Rechnung zu tragen, die nur eine geringere Verdrehung der Sperrklinke gegenüber dem Handbremshebel erlauben.

Eine besonders begünstigte Ausführungsvariante der Erfindung sieht vor, dass die Haltevorsprünge jeweils einen Winkel einnehmen, der etwa dem Winkel des Zwischenraums zwischen den Haltevorsprüngen entspricht. Auf diese Weise ist es möglich, in den Betriebsstellungen minimale Flächenpressungen am Haltevorsprung zu erreichen.

Es ist besonders günstig, wenn der Handbremshebel im Bereich des Lagerzapfens plattenförmig ausgebildet ist. Dadurch kann erreicht werden, dass die Sperrklinke, die vorzugsweise ebenfalls im Wesentlichen plattenförmig ausgebildet ist, direkt an dem Handbremshebel anliegt, so dass der Lagerzapfen geringst möglich auf Biegung belastet wird.

Eine bevorzugte Ausführungsvariante der Erfindung sieht vor, dass die Sperrklinke einen Mitnehmer aufweist, an dem eine Druckstange zur Entriegelung angelenkt ist und dass diese Druckstange den Schwenkbereich und damit die Betriebsstehungen der Sperrklinke festlegt. Durch diese Ausführung wird nach dem Zusammenbau der Handbremse automatisch sichergestellt, dass sich die Sperrklinke nicht mehr von dem Handbremshebel lösen kann. Jedenfalls ist es von besonderem Vorteil, wenn die Sperrklinke in ihren Betriebsstellungen unverlierbar am Handbremshebel gehalten ist.

Die Herstellung des Handbremshebels im Wege des Leichtmetalldruckgusses kann besonders dadurch vereinfacht werden, dass der Handbremshebel im Bereich des Lagerzapfens mindestens eine Entformungsöffnung aufweist, die einen Umriss aufweist, der den Umriss des Haltevorsprungs umschließt. Auf diese Weise wird für die Herstellung des Lagerzapfens samt Haltevorsprung keine besondere gusstechnische Vorkehrung, wie etwa ein Schieber oder dergleichen, benötigt, da der Handbremshebel auch dann entformt werden kann, wenn lediglich zwei Formhälften vorgesehen sind. Von besonderem Vorteil ist es dabei, wenn der Handbremshebel im Bereich des Lagerzapfens eine Anzahl von Entformungsöffnungen aufweist, die der Anzahl der Haltevorsprünge entspricht.

Eine besonders günstige Kombination zwischen geringem Gewicht einerseits und hoher Belastbarkeit andererseits kann dadurch erreicht werden, dass der Handbremshebel aus Leichtmetalldruckguss und die Sperrklinke aus Stahl hergestellt sind. Altenativ ist es möglich, den Handbremshebel im Spritzgussverfahren aus Kunststoff herzustellen.

In der Folge wird die vorliegende Erfindung anhand den in den Figuren dargestellten Ausführungsbeispielen näher erläutert. Es zeigen:
- Fig. 1: schematisch einen Abschnitt einer erfindungsgemäßen Handbremseinrichtung in einer seitlichen Ansicht;
- Fig. 2: ein Detail von Fig. 1 in einem Schnitt nach Linie II - II in vergrößertem Maßstab;
- Fig. 3: ein Detail des Handbremshebels von Fig. 1;
- Fig. 4: die Sperrklinke von Fig. 1; und
- Fig. 5: eine Ansicht entsprechend Fig. 1 von der gegenüberliegenden Seite.

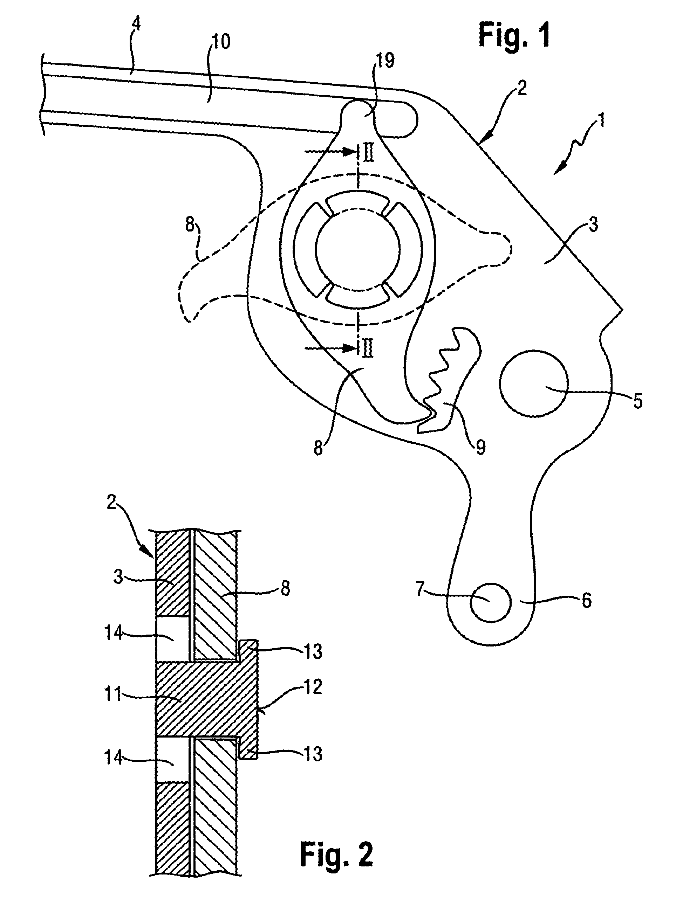

Die Handbremseinrichtung ist in Fig. 1 allgemein mit 1 bezeichnet. Die wesentlichen Bauteile sind ein Handbremshebel 2, der aus einem im Wesentlichen plattenförmigen Grundkörper 3 mit einem daran angeformten Profil oder Rohr 4, einem Lagerabschnitt 5, einem Betätigungsvorsprung 6 und einem Anlenkpunkt 7 für ein nicht dargestelltes Handbremsseil besteht. Der Handbremshebel 2 ist in zusammengebautem Zustand der Handbremse um das Lager 5 schwenkbar gelagert, wobei die Betätigungskraft zur Verschwenkung über das Rohr 4 aufgebracht wird. Am Handbremshebel 2 ist eine allgemein mit 8 bezeichnete Sperrklinke angeordnet, die ein angedeutetes Sperrsegment 9 eingreift. Eine Druckstange 10, die an einem Mitnehmer 19 der Sperrklinke 8 angelenkt ist, kann eine Entriegelung der Sperrklinke 8 gegenüber dem Sperrsegment 9 bewirken.

An dem plattenförmigen Grundkörper 3 des Handbremshebels 2 ist ein Lagerzapfen 11 angeformt, der im Bereich seiner dem Grundkörper 3 gegenüberliegenden Stirnfläche 12 zwei einander gegenüberliegende Haltevorsprünge 13 aufweist. Die Lagervorsprünge 13 dienen dazu, die Sperrklinke 8 in Axialrichtung zu halten, so dass diese nicht vom Handbremshebel 2 entfernt werden kann. Im plattenförmigen Grundkörper 3 sind Entformungsöffnungen 14 vorgesehen, deren Umriss über den der Haltevorsprünge 13 hinausgeht, so dass die Formhälfte, die die Rückseite der Haltevorsprünge 13 ausformt, in Richtung des Grundkörpers 3 entformt werden kann. Auf diese Weise sind zur Herstellung des Handbremshebels 2 zumindest im Bereich des Lagerzapfens 11 keine Schieber oder dergleichen erforderlich.

In Fig. 1 ist eine Betriebsstellung der Sperrklinke 8 mit durchgezogenen Linien dargestellt. Weitere Betriebsstellungen unterscheiden sich von der dargestellten Betriebsstellung nur durch geringfügige Schwenkwinkel. Mit unterbrochenen Linien ist die Montagestellung dargestellt, in der die Sperrklinke 8 auf den Handbremshebel 2 aufgesetzt oder von ihm entfernt werden kann. Wie aus Fig. 1 unmittelbar ersichtlich, ist die Montagestellung deutlich, nämlich um etwa 90° gegenüber der typischen Betriebsstellung verschwenkt und kann in zusammengebautem Zustand nicht auftreten, da dies insbesondere die Druckstange 10 verhindert.

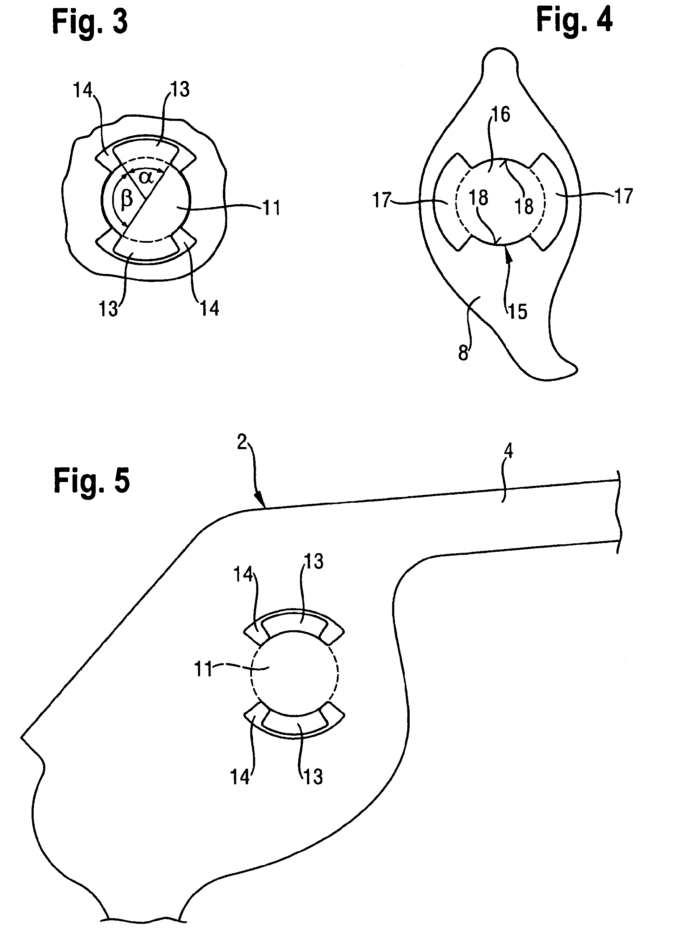

Wie aus Fig. 3 ersichtlich ist, weisen die Haltevorsprünge 13 von der Achse des Lagerzapfens 11 aus gesehen, einen Winkel α auf, der mit knapp 90° etwa gleich groß ist, wie der Winkel β des Zwischenraums zwischen den Haltevorsprüngen 13.

Die Sperrklinke 8 besitzt eine Öffnung 15, die einen kreisförmigen Lagerabschnitt 16 aufweist, der an den Lagerzapfen 11 angepasst ist und von dem aus zwei Montagevorsprünge 17 ausgehen, die so ausgebildet sind, dass sie in der Montagestellung über die Haltevorsprünge 13 geschoben werden können. Die in Fig. 4 mit unterbrochenen Linien angedeutete Begrenzung zwischen dem Lagerabschnitt 16 und dem Montagevorsprüngen 17 ist nur gedacht, da die Öffnung 15 durchgängig ist. Wesentlich ist, dass ein Teil des Umrisses der Öffnung 15, der mit 18 bezeichnet ist, kreisförmig ausgebildet ist und in seinen Abmessungen an dem Lagerzapfen 11 angepasst ist, um gemeinsam mit diesem Lagerzapfen 11 ein Gleitlager zu ergeben. In diesem Zusammenhang wird angemerkt, dass es aufgrund der erforderlichen Gussschrägen im Allgemeinen so sein wird, dass der Lagerzapfen 11 nicht zylindrisch, sondern leicht konisch ausgeführt ist.

In Fig. 5 ist die Rückseite des Handbremshebels 2 ersichtlich. Insbesondere sind in Fig. 5 durch die Entformungsöffnungen 14 die Rückseiten der Haltevorsprünge 13 ersichtlich.

Die vorliegende Erfindung ermöglicht es, eine Sperrklinke ohne zusätzliche Befestigungselemente an einem Handbremshebel anzulenken und sicher zu lagern. Weiter ist es mit der vorliegenden Erfindung möglich, eine hohe Gewichtseinsparung durch Optimierung der einzelnen Bauteile zu erreichen.

## Patentansprüche

1. Handbremseinrichtung mit einem eine Arretiervorrichtung aufweisenden Handbremshebel (2), welche ein Sperrsegment (9) und eine in dieses eingreifende Sperrklinke (8) aufweist, wobei die Sperrklinke (8) am Handbremshebel (2) schwenkbar gelagert ist, **dadurch gekennzeichnet, dass** am Handbremshebel (2) ein Lagerzapfen (11) angeformt ist, der mindestens einen Haltevorsprung (13) aufweist, und dass die Sperrklinke (8) eine Öffnung (15) aufweist, die einen kreisförmigen Lagerabschnitt (16) aufweist, der an den Lagerzapfen (11) angepasst ist und von dem mindestens ein Montagevorsprung (17) ausgeht, der einen Umriss aufweist, der in einer Montagestellung der Sperrklinke (8) den Umriss des Haltevorsprungs (13) umschließt, wobei in den Betriebsstellungen der Sperrklinke (8) der Haltevorsprung (13) über den Umriss der Öffnung (15) hinausgeht.

2. Handbremseinrichtung nach Anspruch 1, **dadurch gekennzeichnet, dass** der Lagerzapfen (11) zwei einander gegenüberliegende Haltevorsprünge (13) aufweist.

3. Handbremseinrichtung nach Anspruch 1, **dadurch gekennzeichnet, dass** der Lagerzapfen (11) mehr als zwei gleichmäßig über den Umfang verteilte Haltevorsprünge (13) aufweist.

4. Handbremseinrichtung nach Anspruch 2 oder 3, **dadurch gekennzeichnet, dass** die Haltevorsprünge (13) jeweils einen Winkel (α) einnehmen, der etwa dem Winkel (β) des Zwischenraums zwischen den Haltevorsprüngen (13) entspricht.

5. Handbremseinrichtung nach einem der Ansprüche 1 bis 4, **dadurch gekennzeichnet, dass** der Handbremshebel (2) im Bereich des Lagerzapfens (11) plattenförmig ausgebildet ist.

6. Handbremseinrichtung nach einem der Ansprüche 1 bis 5, **dadurch gekennzeichnet, dass** die Sperrklinke (8) im Wesentlichen plattenförmig ausgebildet ist.

7. Handbremseinrichtung nach einem der Ansprüche 1 bis 6, **dadurch gekennzeichnet, dass** die Sperrklinke (8) einen Mitnehmer (19) aufweist, an dem eine Druckstange (10) zur Entriegelung angelenkt ist und dass diese Druckstange (10) den Schwenkbereich und damit die Betriebsstellungen der Sperrklinke (8) festlegt.

8. Handbremseinrichtung nach einem der Ansprüche 1 bis 7, **dadurch gekennzeichnet, dass** die Sperrklinke (8) in ihren Betriebsstellungen unverlierbar am Handbremshebel (2) gehalten ist.

9. Handbremseinrichtung nach einem der Ansprüche 1 bis 8, **dadurch gekennzeichnet, dass** der Handbremshebel (2) im Bereich des Lagerzapfens (11) mindestens eine Entformungsöffnung (14) aufweist, die einen Umriss aufweist, der den Umriss des Haltevorsprungs (13) umschließt.

10. Handbremseinrichtung nach Anspruch 9, **dadurch gekennzeichnet, dass** der Handbremshebel (2) im Bereich des Lagerzapfens (11) eine Anzahl von Entformungsöffnungen (14) aufweist, die der Anzahl der Haltevorsprünge (13) entspricht.

11. Handbremseinrichtung nach einem der Ansprüche 1 bis 10, **dadurch gekennzeichnet, dass** der Handbremshebel (2) aus Leichtmetalldruckguss hergestellt ist und dass die Sperrklinke (8) vorzugsweise aus Stahl hergestellt ist.

12. Handbremseinrichtung nach einem der Ansprüche 1 bis 10, **dadurch gekennzeichnet, dass** der Handbremshebel (2) aus Kunststoff hergestellt ist und dass die Sperrklinke (8) vorzugsweise aus Stahl hergestellt ist.

## Claims

1. Handbrake assembly comprising a handbrake lever (2) provided with a locking device, said device having a locking segment (9) and a locking pawl (8) acting on said locking segment, where the locking pawl (8) is tiltably borne on the handbrake lever (2), **characterised in that** a bearing pin (11) with at least one holding nose (13) is formed on the handbrake lever (2), and that the locking pawl (8) has an opening (15) with a circular bearing sector (16) matching the bearing pin (11), from which bearing sector (16) extends at least one assembly sector (17), whose contour surrounds the contour of the holding nose (13) in an assembly position of the locking pawl (8), while in the operating positions of the locking pawl (8) the holding nose (13) extends beyond the contour of the opening (15).

2. Handbrake assembly according to claim 1, **characterised in that** the bearing pin (11) is provided with two opposing holding noses (13).

3. Handbrake assembly according to claim 1, **characterised in that** the bearing pin (11) is provided with more than two holding noses (13) uniformly distributed along its circumference.

4. Handbrake assembly according to claim 2 or 3, **characterised in that** the holding noses (13) extend over an angle (α) which approximately equals the angle (β) of the space between the holding noses (13).

5. Handbrake assembly according to any of claims 1 to 4, **characterised in that** the handbrake lever (2) is plate-shaped in the area of the bearing pin (11).

6. Handbrake assembly according to any of claims 1 to 5, **characterised in that** the locking pawl (8) is essentially plate-shaped.

7. Handbrake assembly according to any of claims 1 to 6, **characterised in that** the locking pawl (8) has an extension (19) on which is linked a releasing push rod (10), and that the push rod (10) defines the tilting range and thus the operating positions of the locking pawl (8).

8. Handbrake assembly according to any of claims 1 to 7, **characterised in that** the locking pawl (8) is securely held on the handbrake lever (2) in its operating positions.

9. Handbrake assembly according to any of claims 1 to 8, **characterised in that** the handbrake lever (2) is provided with at least one opening (14) for easy removal of the casting mould in the area of the bearing pin (11), whose contour surrounds the contour of the holding nose (13).

10. Handbrake assembly according to claim 9, **characterised in that** the handbrake lever (2) has a number of mould removal openings (14) in the area of the bearing pin (11) corresponding to the number of holding noses (13).

11. Handbrake assembly according to any of claims 1 to 10, **characterised in that** the handbrake lever (2) is made by light-metal die casting and that the locking pawl (8) is preferably made of steel.

12. Handbrake assembly according to any of claims 1 to 10, **characterised in that** the handbrake lever (2) is a plastic part and that the locking pawl (8) is preferably made of steel.

## Revendications

1. Installation de frein à main comportant un levier de frein à main (2) muni d'un dispositif de blocage ayant un segment de verrouillage (9) avec lequel coopère un verrou (8),
le verrou (8) étant monté pivotant sur le levier de frein à main (2),
**caractérisée en ce qu'**
un pivot (11) est formé sur le levier de frein à main (2), ce pivot ayant au moins une saillie de retenue (13), et
le verrou (8) comporte une ouverture (15) ayant un segment de palier (16) de forme circulaire adaptée au pivot (11) et muni d'au moins une saillie de montage (17) dont le contour, en position de montage du verrou (8), entoure le contour de la saillie de retenue (13), et en position de fonctionnement du verrou (8), la saillie de retenue (13) dépasse le contour de l'ouverture (15).

2. Installation de frein à main selon la revendication 1,
**caractérisée en ce que**
le pivot (11) comporte deux saillies de retenue (13) qui se font face.

3. Installation de frein à main selon la revendication 1,
**caractérisée en ce que**
le pivot (11) comporte plus de deux saillies de retenue (13) réparties régulièrement à la périphérie.

4. Installation de frein à main selon la revendication 2 ou 3,
**caractérisée en ce que**
les saillies de retenue (13) occupent respectivement un angle (α) correspondant sensiblement à l'angle (β) de l'intervalle entre les saillies de retenue (13).

5. Installation de frein à main selon l'une des revendications 1 à 4,
**caractérisée en ce que**
le levier de frein à main (2) est réalisé sous la forme d'une plaque dans la zone du pivot (11).

6. Installation de frein à main selon l'une des revendications 1 à 5,
**caractérisée en ce que**
le verrou (8) est principalement réalisé sous la forme d'une plaque.

7. Installation de frein à main selon l'une des revendications 1 à 6,
**caractérisée en ce que**
le verrou (8) comporte un organe d'entraînement (19) sur lequel est articulé un poussoir (10) pour le déverrouillage et ce poussoir (10) fixe la plage de pivotement et ainsi les positions de fonctionnement du verrou (8).

8. Installation de frein à main selon l'une des revendications 1 à 7,
**caractérisée en ce que**
le verrou (8) est tenu de manière imperdable au levier de frein à main (2) dans ses positions de fonctionnement.

9. Installation de frein à main selon l'une des revendications 1 à 8,
**caractérisée en ce que**
le levier de frein à main (2) comporte au moins un orifice de démoulage (14) dans la zone du pivot (11), et cet orifice a un contour qui entoure le contour du dispositif de fixation (13).

10. Installation de frein à main selon la revendication 9,
**caractérisée en ce que**
dans la zone du pivot (11), le levier de frein à main (2) comporte un certain nombre d'orifices de démoulage (14) correspondant au nombre de saillies de retenue (13).

11. Installation de frein à main selon l'une des revendications 1 à 10,
**caractérisée en ce que**
le levier de frein à main (2) est fabriqué en fonte de métal léger et le verrou (8) est réalisé de préférence en acier.

12. Installation de frein à main selon l'une des revendications 1 à 10,
**caractérisée en ce que**
le levier de frein à main (2) est fabriqué en matière plastique et le verrou (8) est de préférence en acier.
